# EUROPEAN PATENT SPECIFICATION

(11) **EP 1 781 973 B1**
(45) Date of publication and mention of the grant of the patent: **07.05.2014**
(21) Application number: 05762478.5
(22) Date of filing: 23.06.2005
(51) Int. Cl.: F16K 3/24

(54) **LOW DISTORTION SEAT RING ASSEMBLIES FOR FLUID VALVES**
SITZRINGANORDNUNGEN MIT GERINGER VERFORMUNG FÜR STRÖMUNGSVENTILE
ENSEMBLES A BAGUE DE SIEGE A FAIBLE DISTORSION POUR SOUPAPES A FLUIDE

(30) Priority: 09.07.2004 US 888467
(43) Date of publication of application: 09.05.2007
(73) Proprietor: FISHER CONTROLS INTERNATIONAL LLC, St. Louis, MO 63136 (US)
(72) Inventor: ALMAN, Paul, Taylor, Marshalltown, IA 50158 (US); BARRON, Kimball, Ralph, Marshalltown, IA 50158 (US)
(74) Representative: Bohnenberger, Johannes
(86) International application number: PCT/US2005/022392
(87) International publication number: WO 2006/016994

(56) References cited:
- FR-A- 2 299 572
- US-A- 551 011
- US-A- 2 744 539
- US-A- 3 648 718
- US-A1- 2002 017 327

## Description

### FIELD OF THE DISCLOSURE

The present disclosure relates generally to fluid valves and, more specifically, to low distortion seat ring assemblies for use with fluid valves.

### BACKGROUND

Process control systems often employ fluid valves, such as rotary valves (e.g., ball valves, butterfly valves, etc.) and/or sliding stem valves such as, for example, globe valves to control the flow of process fluids. In general, the trim used within known sliding stem valves includes a seat ring, a gasket for sealing between the seat ring and the valve body, a closure member (e.g., a plug), and a cage, which may guide the movement of the closure member, provide a desired flow characteristic, reduce flow induced noise or turbulence, inhibit cavitation, etc.

In operation, the closure member may be moved linearly via a valve stem toward or away from the seat ring to vary an amount of fluid flowing through the valve. To close the valve and prevent the flow of fluid through the valve, the closure member or plug is driven against the seat ring. To achieve a tight shut off, the sealing surfaces of the seat ring and closure member must be substantially free of distortion.

In many known sliding stem valves such as globe valves, the seat ring is configured to be bolted to the valve body. However, when the seat ring is installed in the valve body and the bolts are tightened, the seat ring is often distorted in a manner that compromises the ability of the closure member to seal against the seat ring. For example, the seat ring may be distorted to have a non-circular opening or out-of-round characteristic and/or may otherwise become misaligned or improperly shaped with respect to the closure member.

To correct the seat ring distortions that occur when the seat ring is bolted to a valve body, the seat ring may be machined after it is installed within the valve body to restore its ability to seal against the closure member. However, once the seat ring has been machined in this manner, the seat ring and valve body become a matched set, thereby precluding subsequent field replacement or maintenance of the valve trim.

US-A-551011 shows the features of the preamble of claim 1.

### BRIEF DESCRIPTION OF THE DRAWINGS

FIG. 1 is an exploded assembly view of a known seat ring assembly.
FIG. 2 is a cross sectional view of the known seat ring assembly shown in FIG.1.
FIG. 3 is an exploded assembly view of an example low distortion seat ring assembly.
FIG. 4 is an assembly view of the example seat ring assembly shown in FIG. 4.
FIG. 5 is a cross sectional view of the example seat ring assembly shown in FIGS. 3 and 4.
FIG. 6 is a cross sectional view of another example seat ring assembly.
FIGS. 7-9 are example multi-piece retainers that may be used with the example seat ring assemblies described herein.
FIG. 10 is an example fluid valve within which the example seat ring assemblies described herein may be used.

### SUMMARY

In one example embodiment, a seat ring assembly for use with a fluid valve includes a seat ring having an outer circumferential surface and a shoulder extending about at least a portion of the outer circumferential surface. The shoulder includes a first surface configured to form a seal against a valve body and a second surface substantially opposite the first surface. The seat ring assembly also includes a seat ring retainer configured to be attached to the valve body and to apply a force to the second surface to hold the first surface to form the seal against the valve body.

In another example embodiment, a seat ring assembly includes a substantially cylindrical member having a first end configured to seal against a valve closure member and a second end configured to form a seal with a valve body. The seat ring assembly also includes a retainer configured to be attached to the valve body and to apply a force to an outer surface of the substantially cylindrical member to hold the first end of the substantially cylindrical member to form a sealed engagement with the valve body.

In yet another embodiment, a seat ring assembly includes a seat ring and a seat retainer configured to fasten the seat ring to a valve body to impart substantially no distortion to seat ring in a fastened condition.

In still another embodiment, a method of reducing distortion imparted to a seat ring when fastening the seat ring to a valve body includes placing the seat ring within the valve body, engaging a seat ring retainer with the seat ring, and bolting the seat ring retainer to the valve body to fasten the seat ring to the valve body without imparting substantial distortion to the seat ring.

### DETAILED DESCRIPTION

The example low distortion seat ring assemblies described herein use a seat ring portion or structure and a retainer portion or structure to hold the seat ring portion or structure in a sealed engagement with a valve body. In contrast to known seat ring assemblies, the example seat ring assemblies described herein are configured so that a seat ring retainer applies a sealing force to a structure associated with an outer surface of the seat ring that is opposite and substantially aligned with a sealing surface and/or gasket associated with the seat ring. As a result of the manner in which the example seat ring retainers apply compressive force to the seat ring, distortion of the seat ring following its installation within the valve body is substantially reduced or eliminated, thereby eliminating the need to perform a secondary machining operation on the seat ring and enabling subsequent field replacement and maintenance of the seat ring assembly.

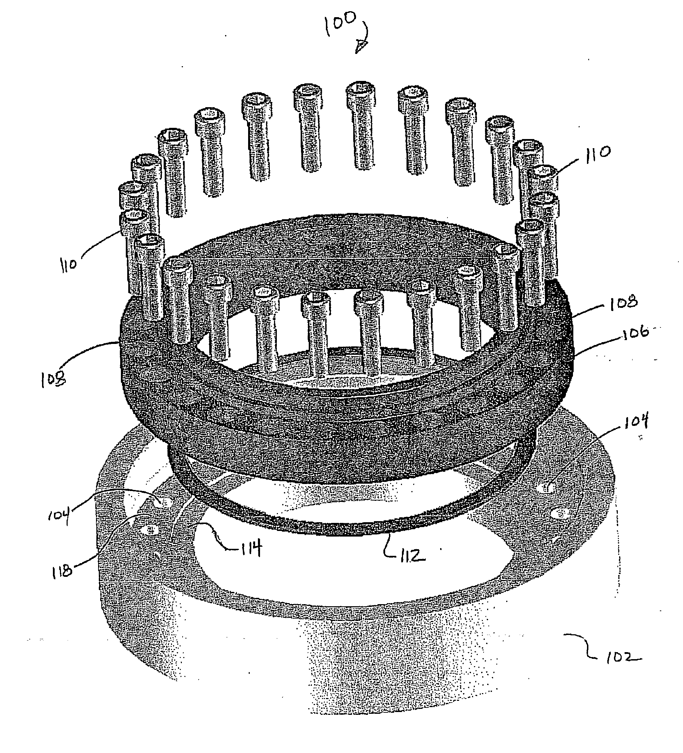

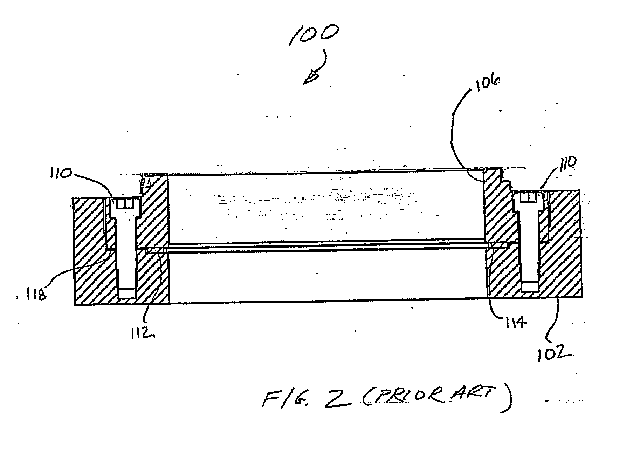

Before turning to a discussion of the example low distortion seat ring assemblies mentioned above, a description of an example known seat ring assembly is provided below in connection with FIGS. 1 and 2. FIG. 1 depicts an exploded assembly view of an example seat ring assembly 100. As shown in FIG. 1, a valve body 102 (only a portion of which is shown for clarity) includes a plurality of threaded apertures 104. A seat ring 106, which is of unitary construction, includes a plurality of passages 108 that correspond to the threaded apertures 104. Cap bolts 110 pass through the passages 108 to threadably engage with the apertures 104 to fasten, fix or attach the seat ring 106 to the valve body 102. A spiral gasket 112 is compressed between a sealing surface 114 of the valve body 102 and the seat ring 106 to form a seal therebetween. A cage (not shown) may be disposed on the seat ring 106 in a conventional manner.

FIG. 2 is cross sectional view of the example known seat ring assembly 100 shown in FIG. 1. As can be seen in FIG. 2, the cap bolts 110 pass through a portion of the seat ring 106 that is radially spaced from the portion of the seat ring 106 that contacts the gasket 112. In addition, to ensure that the gasket 112 is compressed between the seat ring 106 and the valve body 102, the sealing surface 114 is configured (e.g., is recessed) so that prior to installation of the seat ring 106, an upper surface of the gasket 112 extends above a surface 118 of the valve body 102 (e.g., prior to its compression, the gasket 112 has a thickness that exceeds the depth of the recessed surface 114). When the seat-ring 106 is bolted to the valve body 102, the gasket 112 is compressed via a portion of the seat ring 106 that is spaced radially inwardly from (i.e., is not substantially aligned with) the cap bolts 110, which imparts a bending moment to the seat ring 106 about the gasket 112. The bending moment imparted to the seat ring 106 can result in a distortion of the seat ring 106, which may prevent the seat ring 106 from sealing against a closure member such as a plug (not shown) unless a secondary machining operation is performed on the seat ring 106.

In addition, the spiral gasket 112 is typically used with the example known seat ring assembly 100 of FIGS. 1 and 2 to maintain tension in the cap bolts 110 to inhibit or prevent loosening of the cap bolts 110 and a loss of the seal between the gasket 112, the valve body 102, and the seat ring 106. However, such spiral gaskets are relatively costly and have unpredictable compression characteristics, which further aggravate the above-noted seat ring distortion problems.

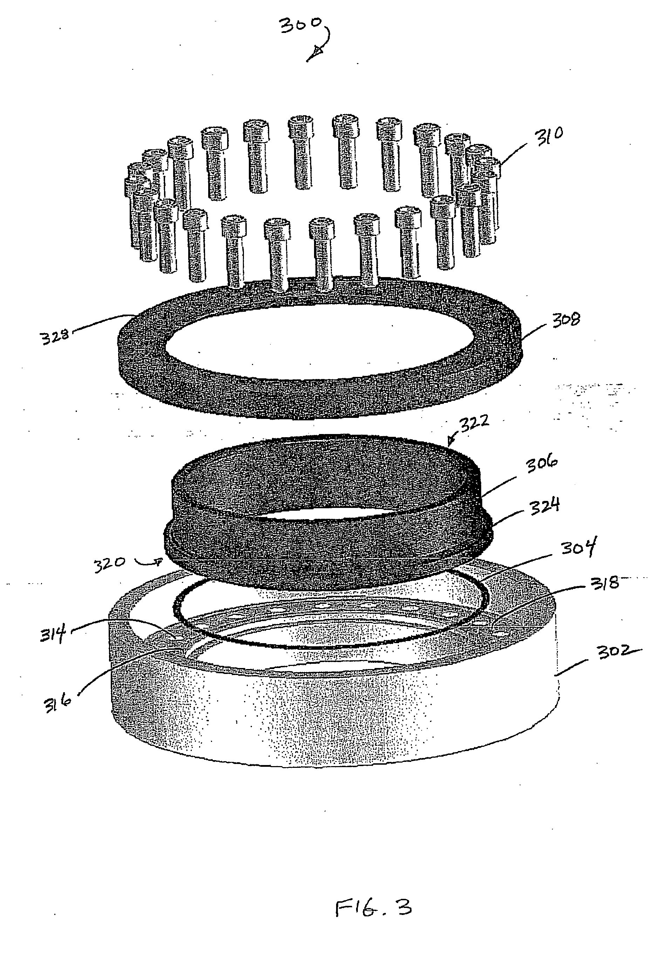

FIG. 3 is an exploded view of an example low distortion seat ring assembly 300 according to one embodiment. The example seat ring assembly 300 includes a valve body 302 (only a portion of which is shown for clarity), a flat sheet gasket 304, a seat ring 306, a seat ring retainer 308, and threaded fasteners 310.

As depicted in the example assembly 300 of FIG. 3, the valve body 302 includes a plurality of circumferentially spaced apertures 314, which may be threaded to engage with the threaded fasteners 310, and a sealing surface 316 that may be recessed relative to a surface 318 and configured to form a seal with the gasket 304 and the seat ring 306. While the gasket 304 is depicted as being a flat sheet gasket, other suitable types of gaskets could be used instead.

As shown, the seat ring 306 is a substantially cylindrical member that has a first end 320 configured to seal against the gasket 304 and the sealing surface 316 of the valve body 302. The seat ring 306 has a second end 322 that is configured to seal against a closure member such as a plug (not shown). The seat ring 306 also includes a structure such as, for example, a shoulder 324 that extends about at least a portion of an outer circumferential surface 326 of the seat ring 306. The shoulder 324 is configured to engage with the seat ring retainer 308 to hold the first end 320 of the seat ring 306 to form a seal or in a sealed engagement with the valve body 302.

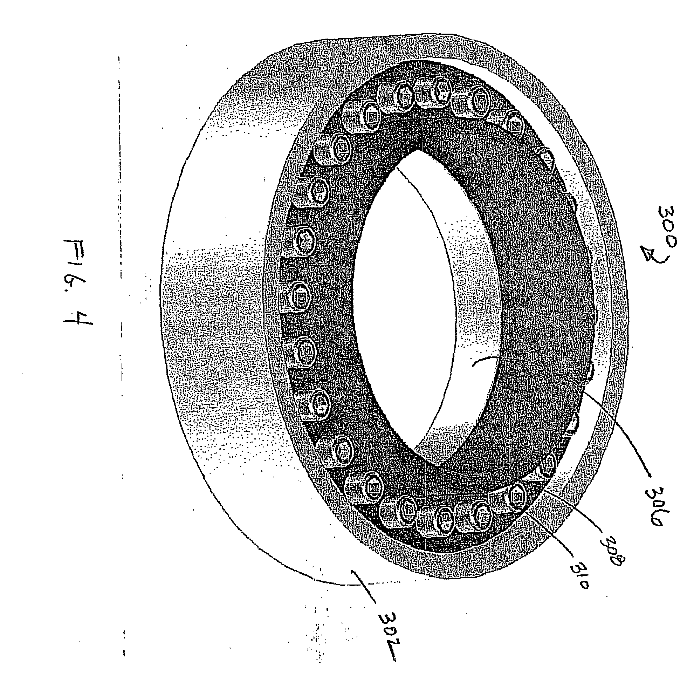

The seat ring retainer 308 is substantially ring-shaped and includes a plurality of apertures or passages 328 through which the fasteners 310 pass to engage with the threaded apertures 314 to attach the seat ring retainer 308 and the seat ring 306 to the valve body 302. FIG. 4 depicts an assembled view of the example seat ring assembly 300 of FIG. 3.

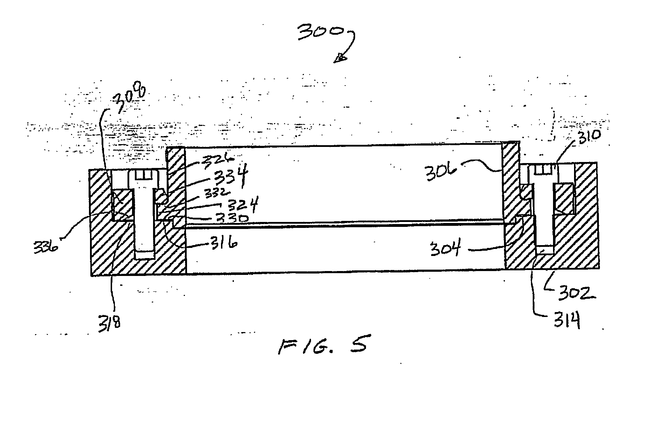

FIG. 5 is cross sectional view of the example seat ring assembly 300 of FIGS. 3 and 4. As can be seen in FIG. 5, the shoulder 324 of the seat ring 306 has a first surface 330 that engages the gasket 304 (most clearly shown in FIG. 3) to form a seal against the valve body 302. The shoulder 324 has a second surface 332 substantially opposite and substantially aligned with the first surface 330. When the seat ring 306 and seat ring retainer 308 are fixed, fastened or attached to the valve body 302 by tightening the threaded fasteners 310 into the apertures 314, an inner circumferential portion 334 of the seat ring retainer 308 drives against the second surface 332 of the shoulder 324. The ability of the seat ring retainer 308 to move relative to the seat ring 306 (e.g., pivotally) during installation of the seat ring 306 and the seat ring retainer 308 results in substantially all of the force applied to the seat ring 306 via the surface 332 to be substantially opposite or aligned with the surface 330, the gasket 304, and the surface 316.

The seat ring retainer 308 may also include a circumferential chamfered portion 336 that may facilitate relative movement (e.g., rotation, rocking, pivoting, etc.) of the retainer 308 toward the shoulder 324 of the seat ring 306. Such movement of the retainer 308 relative to the seat ring 306 may facilitate the sealing force applied by the retainer 308 to the seat ring to be substantially aligned with and opposite the gasket 314. In contrast to the known seat ring assembly 100 shown in FIG. 1, and as a result of the manner in which the seat retainer 308 applies force to and holds the seat ring 306, substantially no bending moment or distortion is imparted to the seat ring 306. The substantial elimination of the above-mentioned bending moment and seat ring distortion can eliminate need to perform a secondary machining operation after the seat trim has been installed and enables subsequent field replacement or maintenance of the seat ring 306.

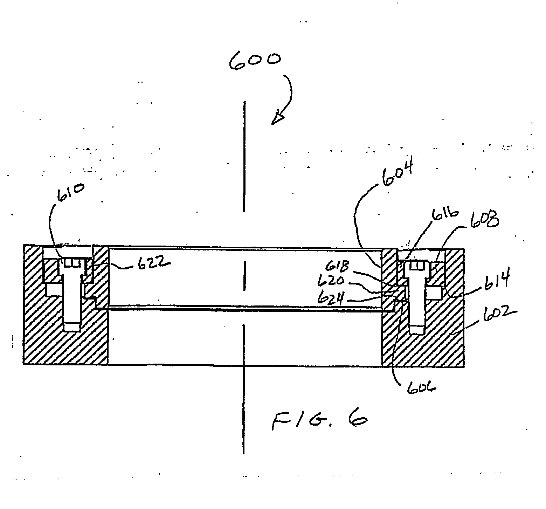

FIG. 6 is a seat ring assembly 600 according to another embodiment The seat ring assembly 600 is similar in many respects to the seat ring assembly 300 and includes a valve body 602 (partially shown), a seat ring 604, a gasket 606 (e.g., a flat sheet gasket), a retainer 608, and a plurality of threaded fasteners 610. In contrast to the valve body 302 of the seat ring assembly 300, the valve body 602 includes a structure such as a shoulder 614 that is configured to receive and support an outer circumferential surface of the retainer 608.

When the retainer 608 and seat ring 604 are bolted or otherwise attached to the valve body 602 via the threaded fasteners 610, an inner circumferential portion 616 of the retainer 608 applies force to a first surface 618 of a shoulder 620, which extends about at least a portion of an outer circumferential surface 622 of the seat ring 604. The force applied to the first surface 618 holds a second surface 624 against the gasket 606 to form a seal against the valve body 602.

The ability of the retainer 608 to move (e.g., pivot about the shoulder 614) relative to the seat ring 604 during installation of the seat ring 604 and the retainer 608 enables the force applied to the shoulder 620 of the sealing ring 604 to be substantially opposite and aligned with the gasket 606. As a result, substantially no bending moment and, thus, substantially no distortion is imparted to the seat ring 604 when the seat ring 604 is installed within the valve body 602.

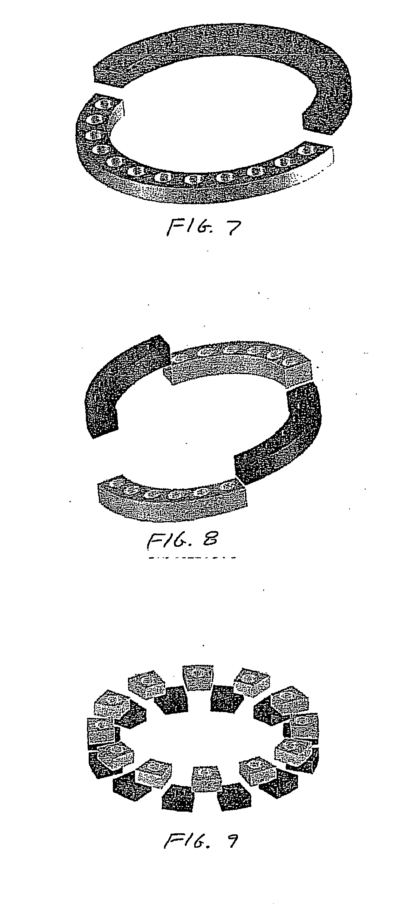

FIGS. 7, 8 and 9 depict example seat ring retainers having multiple sections or segments. In particular, FIG. 7 depicts a two-piece retainer, FIG. 8 depicts a four-piece retainer, and FIG. 9 depicts a twelve-piece retainer, which provides a retainer section or segment for each threaded fastener used. The multi-piece retainers shown in FIGS. 7-9 may be used to implement the retainers 308 and 608 described above. The multi-piece retainers shown in FIGS. 7-9 may be advantageously used in applications where the inner diameter of the valve opening (e.g., the opening of the upper portion of the valve body to which a bonnet may be attached) is smaller than the outer diameter of the assembled seat ring retainer. In this case, the multiple pieces of the retainer can be separately passed through the valve opening and assembled within the valve body.

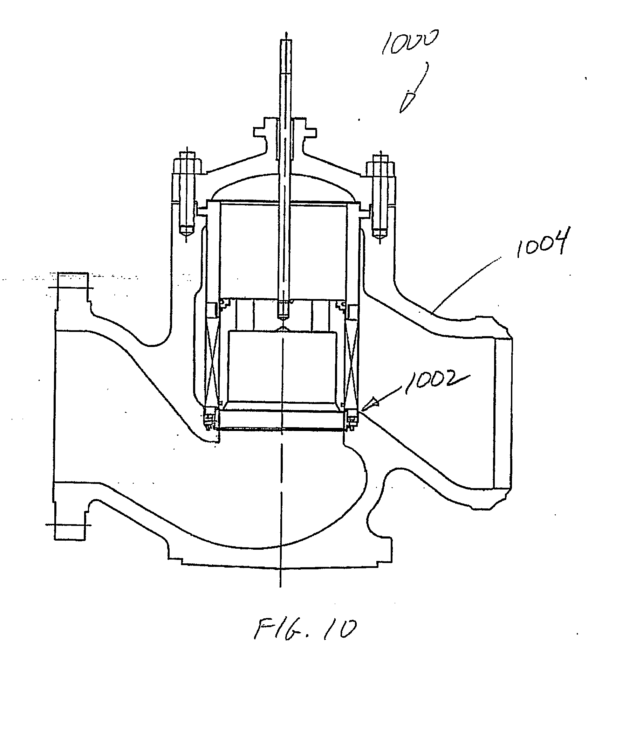

FIG. 10 is an example of a globe valve 1000 within which the example seat ring assemblies described herein may be used. The example valve 1000 includes a seat ring assembly 1002 that is fixed to a body 1004 of the valve 1000 generally as described herein. However, it should be understood that the example seat ring assemblies described herein may be more generally applicable to other types of fluid valves as well.

Although certain apparatus have been described herein, the scope of coverage of this patent is not limited thereto. To the contrary, this patent covers all embodiments fairly falling within the scope of the appended claims either literally or under the doctrine of equivalents.

The invention is defined by appended claims only.

## Claims

1. A seat ring assembly (300) for use with a fluid valve, comprising:
a seat ring (306) having an outer circumferential surface and a shoulder (324) extending about at least a portion of the outer circumferential surface, wherein the shoulder (324) includes a first surface (320) configured to form a seal against a valve body (302) and a second surface (332) substantially opposite the first surface (320), and wherein the seat ring (306) is substantially cylindrical; and
a seat ring retainer (308) configured to be attached to the valve body and to apply a force to the second surface (332) to hold the first surface (320) to form the seal against the valve body (302), wherein the seat ring retainer (308) includes a plurality of passages (328) configured to enable threaded fasteners to pass through and attach the seat ring retainer (308) to the valve body (302), by means of appropriately aligned threaded apertures (314) therein, **characterised in that** the seat ring retainer (308) is substantially ring-shaped, and the first surface (320) is configured to seal against a flat sheet gasket (304).

2. A seat ring assembly (300) as defined in claim 1, wherein the seat ring retainer (308) is configured to be moveable relative to the seat ring (306) as the seat ring (306) and the seat ring retainer (308) are installed within the valve body.

3. A seat ring assembly (300) as defined in claim 1, wherein the first (320) and second surfaces (332) are configured to be substantially aligned with the gasket (304) and a sealing surface (316) of the valve body.

4. A seat ring assembly (300) as defined in claim 1, wherein the seat ring retainer (308) includes a plurality of sections.

5. A seat ring assembly (300) as defined in claim 1, wherein the seat ring retainer (308) includes an inner circumferential portion configured (334) to apply the force to the shoulder (329) and an outer circumferential portion configured to be supported by a portion of the valve body (302).

6. A seat ring assembly (300) as defined in claim 5, wherein the portion of the valve body (302) is another shoulder.

7. A method of reducing distortion imparted to a seat ring (306) when fastening the seat ring (306) to a valve body (302), comprising:
providing the seat ring assembly (300) according to any one of claims 1-6;
placing the seat ring (306) within the valve body (302);
engaging a seat ring retainer (308) with the seat ring (306); and
bolting the seat ring retainer (308) to the valve body (302) to fasten the seat ring (306) to the valve body (302) without imparting substantial distortion to the seat ring (306).

8. A method as defined in claim 7, wherein the seat ring retainer (308) is a multi-piece structure.

9. A method as defined in claim 7, wherein bolting the seat ring retainer (308) to the valve body (302) includes moving the seat ring retainer (308) relative to the seat ring (306) during the bolting of the seat ring retainer (308).

10. A method as defined in claim 7, wherein the engaging the seat ring retainer (308) with the seat ring (306) includes engaging the seat ring retainer (308) with the seat ring (306) at an outer circumferential surface of the seat ring (306).

## Patentansprüche

1. Sitzringbaugruppe (300) zur Verwendung mit einem Fluidventil, Folgendes aufweisend:
einen Sitzring (306) mit einer Außenumfangsfläche und einer Schulter (324), die sich um zumindest einen Abschnitt der Außenumfangsfläche erstreckt, wobei die Schulter (324) eine erste Fläche (320), die dazu ausgelegt ist, eine Abdichtung gegen einen Ventilkörper (302) zu bilden, und eine der ersten Fläche (320) im Wesentlichen entgegengesetzte, zweite Fläche (332) aufweist, und wobei der Sitzring (306) im Wesentlichen zylindrisch ist; und
einen Sitzringhalter (308), der dazu ausgelegt ist, am Ventilkörper befestigt zu werden und eine Kraft an die zweite Fläche (332) zum Halten der ersten Fläche (320) anzulegen, um die Abdichtung gegen den Ventilkörper (302) zu bilden, wobei der Sitzringhalter (308) mehrere Durchgänge (328) umfasst, die dazu ausgelegt sind, mit Gewinde versehene Befestigungselemente hindurchgehen und den Sitzringhalter (308) am Ventilkörper (302) mittels angemessen ausgerichteter, mit Gewinde versehener Öffnungen (314) darin befestigen zu lassen, **dadurch gekennzeichnet, dass** der Sitzringshalter (308) im Wesentlichen ringförmig ist, und die erste Fläche (320) dazu ausgelegt ist, gegen eine flache Dichtungsscheibe (304) abzudichten.

2. Sitzringbaugruppe (300) nach Anspruch 1, wobei der Sitzringhalter (308) dazu ausgelegt ist, in Bezug auf den Sitzring (306) beweglich zu sein, wenn der Sitzring (306) und der Sitzringhalter (308) im Ventilkörper installiert sind.

3. Sitzringbaugruppe (300) nach Anspruch 1, wobei die erste (320) und zweite (332) Fläche dazu ausgelegt sind, mit der Dichtungsscheibe (304) und einer Dichtfläche (316) des Ventilkörpers im Wesentlichen zu fluchten.

4. Sitzringbaugruppe (300) nach Anspruch 1, wobei der Sitzringhalter (308) mehrere Abschnitte aufweist.

5. Sitzringbaugruppe (300) nach Anspruch 1, wobei der Sitzringhalter (308) einen Innenumfangsabschnitt (334), der dazu ausgelegt ist, eine Kraft an die Schulter (329) anzulegen, und einen Außenumfangsabschnitt aufweist, der dazu ausgelegt ist, durch einen Abschnitt des Ventilkörpers (302) abgestützt zu sein.

6. Sitzringbaugruppe (300) nach Anspruch 5, wobei es sich bei dem Abschnitt des Ventilkörpers (302) um eine andere Schulter handelt.

7. Verfahren zum Reduzieren einer Verwindung, die einem Sitzring (306) beim Befestigen des Sitzrings (306) an einem Ventilkörper (302) erteilt wird, Folgendes umfassend:
Bereitstellen der Sitzringbaugruppe (300) nach einem der Ansprüche 1 bis 6;
Einsetzen des Sitzrings (306) in den Ventilkörper (302);
Bewirken, dass ein Sitzringhalter (308) mit dem Sitzring (306) in Eingriff gebracht wird; und
Anschrauben des Sitzringhalters (308) am Ventilkörper (302), um den Sitzring (306) am Ventilkörper (302) zu befestigen, ohne dem Sitzring (306) eine wesentliche Verwindung zu erteilen.

8. Verfahren nach Anspruch 7, wobei es sich bei dem Sitzringhalter (308) um eine mehrstückige Struktur handelt.

9. Verfahren nach Anspruch 7, wobei das Anschrauben des Sitzringhalters (308) am Ventilkörper (302) umfasst, den Sitzringhalter (308) während des Anschraubens des Sitzringhalters (308) in Bezug auf den Sitzring (306) zu bewegen.

10. Verfahren nach Anspruch 7, wobei das Bewirken, dass der Sitzringhalter (308) mit dem Sitzring (306) in Eingriff gebracht wird, umfasst, den Sitzringhalter (308) an einer Außenumfangsfläche des Sitzrings (306) mit dem Sitzring (306) in Eingriff zu bringen.

## Revendications

1. Ensemble de bague de siège (300) à utiliser avec une soupape à fluide, comprenant :
une bague de siège (306) présentant une surface circonférentielle extérieure et un épaulement (324) s'étendant autour d'au moins une partie de la surface circonférentielle extérieure, dans lequel l'épaulement (324) présente une première surface (320) qui est configurée de manière à former un joint contre un corps de soupape (302), et une deuxième surface (332) qui est sensiblement opposée à la première surface (320), et dans lequel la bague de siège (306) est sensiblement cylindrique ; et
un élément de retenue de bague de siège (308) qui est configuré de manière à être attaché au corps de soupape et à appliquer une force sur la deuxième surface (332) afin de maintenir la première surface (320) pour former le joint contre le corps de soupape (302), dans lequel l'élément de retenue de bague de siège (308) comprend une pluralité de passages (328) configurés de manière à permettre à des éléments de fixation filetés de passer à travers et de fixer l'élément de retenue de bague de siège (308) sur le corps de soupape (302), au moyen d'ouvertures filetées alignées de façon appropriée (314) dans celui-ci, **caractérisé en ce que** l'élément de retenue de bague de siège (308) est de forme sensiblement annulaire, et la première surface (320) est configurée de manière à s'appliquer de façon étanche contre une garniture de joint plate (304).

2. Ensemble de bague de siège (300) selon la revendication 1, dans lequel l'élément de retenue de bague de siège (308) est configuré de manière à être mobile par rapport à la bague de siège (306) lorsque la bague de siège (306) et l'élément de retenue de bague de siège (308) sont installés à l'intérieur du corps de soupape.

3. Ensemble de bague de siège (300) selon la revendication 1, dans lequel les première (320) et deuxième (332) surfaces sont configurées de manière à être sensiblement alignées avec la garniture (304) et une surface d'étanchéité (316) du corps de soupape.

4. Ensemble de bague de siège (300) selon la revendication 1, dans lequel l'élément de retenue de bague de siège (308) comprend une pluralité de sections.

5. Ensemble de bague de siège (300) selon la revendication 1, dans lequel l'élément de retenue de bague de siège (308) comprend une partie circonférentielle intérieure (334) qui est configurée de manière à appliquer la force sur l'épaulement (329), et une partie circonférentielle extérieure qui est configurée de manière à être supportée par une partie du corps de soupape (302).

6. Ensemble de bague de siège (300) selon la revendication 5, dans lequel la partie du corps de soupape (302) est un autre épaulement.

7. Procédé pour réduire la distorsion imprimée à une bague de siège (306) lors de la fixation de la bague de siège (306) à un corps de soupape (302), comprenant les étapes suivantes :
fournir l'ensemble de bague de siège (300) selon l'une quelconque des revendications 1 à 6 ;
placer la bague de siège (306) à l'intérieur du corps de soupape (302) ;
engager un élément de retenue de bague de siège (308) avec la bague de siège (306) ; et
boulonner l'élément de retenue de bague de siège (308) sur le corps de soupape (302) afin de fixer la bague de siège (306) sur le corps de soupape (302) sans imprimer une distorsion substantielle à la bague de siège (306).

8. Procédé selon la revendication 7, dans lequel l'élément de retenue de bague de siège (308) est une structure à pièces multiples.

9. Procédé selon la revendication 7, dans lequel le boulonnage de l'élément de retenue de bague de siège (308) sur le corps de soupape (302) comprend le déplacement de l'élément de retenue de bague de siège (308) par rapport à la bague de siège (306) pendant le boulonnage de l'élément de retenue de bague de siège (308).

10. Procédé selon la revendication 7, dans lequel l'engagement de l'élément de retenue de bague de siège (308) avec la bague de siège (306) comprend l'engagement de l'élément de retenue de bague de siège (308) avec la bague de siège (306) à une surface circonférentielle extérieure de la bague de siège (306).
